(19) Europäisches Patentamt
European Patent Office
Office européen des brevets

(11) Publication number: **0 129 983 B1**

(12) # EUROPEAN PATENT SPECIFICATION

(45) Date of publication of patent specification: **23.08.89**

(51) Int. Cl.[4]: **B 01 D 46/10**

(21) Application number: **84303472.9**

(22) Date of filing: **22.05.84**

(54) **Filter cassette.**

(30) Priority: **23.05.83 US 496825**

(43) Date of publication of application:
**02.01.85 Bulletin 85/01**

(45) Publication of the grant of the patent:
**23.08.89 Bulletin 89/34**

(84) Designated Contracting States:
**AT BE CH DE FR GB IT LI LU NL SE**

(56) References cited:
**DD-A- 137 190**
**US-A-2 586 935**
**US-A-2 701 030**
**US-A-4 178 794**

(73) Proprietor: **ENVIRONMENTAL SAFETY PRODUCTS, INC.**
**P.O. Box 331 Montchanin**
**Wilmington Delaware 19710 (US)**

(72) Inventor: **Trayford III, Charles**
**4960 South Raintree Court**
**Wilmington Delaware 19808 (US)**
Inventor: **Petrizzi, Jeffrey M.**
**2006 Kentmere Parkway**
**Wilmington Delaware 19807 (US)**

(74) Representative: **Bayliss, Geoffrey Cyril et al**
**BOULT, WADE & TENNANT 27 Furnival Street**
**London EC4A 1PQ (GB)**

**EP 0 129 983 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a filter cassette, and more particularly to a self-contained personal filter cassette for the sampling of substances in the air.

In many instances, airborne substances are collected for the purpose of assessing the potential risk to the health of persons arising from the inhalation of such substances at their places of work. Over the years, a wide variety of approaches have been suggested for collecting such samples. The physical act of sampling airborne substances generally involves the removal of a portion of the surrounding air by suction, and the analysis of the airborne substances thus aspirated. The airborne substances so collected are analyzed for concentration, composition and size distribution and such information is extremely useful in health hazard analysis and air pollution studies.

At present, two general types of filter cassettes are used for obtaining samples of airborne substances for subsequent analysis. These are the closed-up face or in-line cassette and the open-face cassette. The open-face cassette has an inherent disadvantage in that it can easily be tampered with by the curious wearer. Additionally, the open-face cassette is easily exposed to splash and other interference from energetic processes, and it is easily contaminated when hung, facing down, directly next to a worker's clothing. While the closed-face cassette is not as easily tampered with or contaminated, as is the open-face cassette, the airborne substances collected on the filter medium in this cassette are unevenly distributed. The substances collected on the filter tend to accumulate directly behind the intake orifice thereby preventing certain tests from being performed on the sample. For example, analyses, such as polarized light microscopy, X-ray diffraction, and X-ray fluorescence analysis, cannot be done directly on the filter medium. Also during gravimetric analysis, some of the airborne substances collected are easily dislodged and possibly lost from the filter medium surface since the substances tend to cake on the filter in one small area. Accordingly, there is real need for a filter cassette which collects uniform distributions of the airborne substances but which is free of the deficiencies inherent in the totally open-face cassette.

US—A—3,693,410, 3,957,469 and 3,983,743 describe filter cassettes known in the art.

US—A—2586935 discloses an air cleaner to protect an engine, compressor or the like against dust and other foreign matter floating in the air comprising a body section having central air flow passageway extending from an air inlet to an air outlet and a part spherical shaped multi-layer filter medium inside the body section disposed across air flow passage for capturing airborne substances flowing through the passageway. The air inlet comprises openings concentrated on one side only of the body, the other side being left without openings as a shield against the on rushing of air against the body. The shaping of the body, disposition of openings and shaping of the filter medium are such that air flow through the filter medium is concentrated towards the centre of the filter medium on the side opposite the inlet openings.

This invention provides a portable filter cassette for sampling of airborne substances on a filter medium 1, which cassette comprises a body section having an air flow passageway extending therethrough from an air inlet to an air outlet, a filter medium inside the body section disposed across the air flow passageway for capturing airborne substances flowing through the passageway, the passageway portion directly downstream from the filter medium having a frusto-conical contour converging in the direction of flow, and the air inlet comprising openings in the body section upstream from the filter medium arranged to direct air into the air flow passageway onto the filter medium; wherein the filter medium is a flat element of uniform properties throughout, and in that air inlet openings are disposed uniformly around the body section to provide a substantially uniform air flow into said air flow passageway and onto the filter medium to obtain a uniform distribution of airborne substances on said filter medium.

The body section may include an outside frusto-conical surface in which the air openings are located, the openings being in the form of circumferential slots around the circumference of the outside frusto-conical surface. Alternatively, the body section may include cylindrical surface in which the air inlet openings are located, the openings being in the form of circumferential slots around the circumference of the outside cylindrical surface. Preferably, the body section includes inside and outside portions with a releasable connection between the portions in the form of a friction fit. The filter medium is disposed between the inner and outer portions of the body section and the outer portion of the body section may include an annular bead next to the peripheral portion of the medium for engaging and holding it in place between the inner and outer portions of the body section.

A pump is connected to the air outlet of the body section for drawing airborne substances into and through the air passageway and onto the filter medium. The pump may include a hose connected to the body section at the air outlet.

Additionally, attaching structure may be provided on the outside of the body section for securing the cassette to the user. Moreover, the body section may be fabricated from thermoplastic material, if desired.

The following is a description of some specific embodiments of the present invention reference being made to the accompanying drawings in which:

Figure 1 is a front elevational view of a filter cassette, according to the present invention, the cassette being attached to the clothing of the user and connected to a suitable pump;

Figure 2 is a left side elevational view of the filter cassette shown in Figure 1;

Figure 3 is a sectional view taken along line 3—3 of Figure 2;

Figure 4 is a sectional view taken along line 4—4 of Figure 1;

Figure 5 is a top plan view of the outer body portion of an alternative filter cassette, according to the present invention; and

Figure 6 is a sectional view taken along line 6—6 of Figure 5.

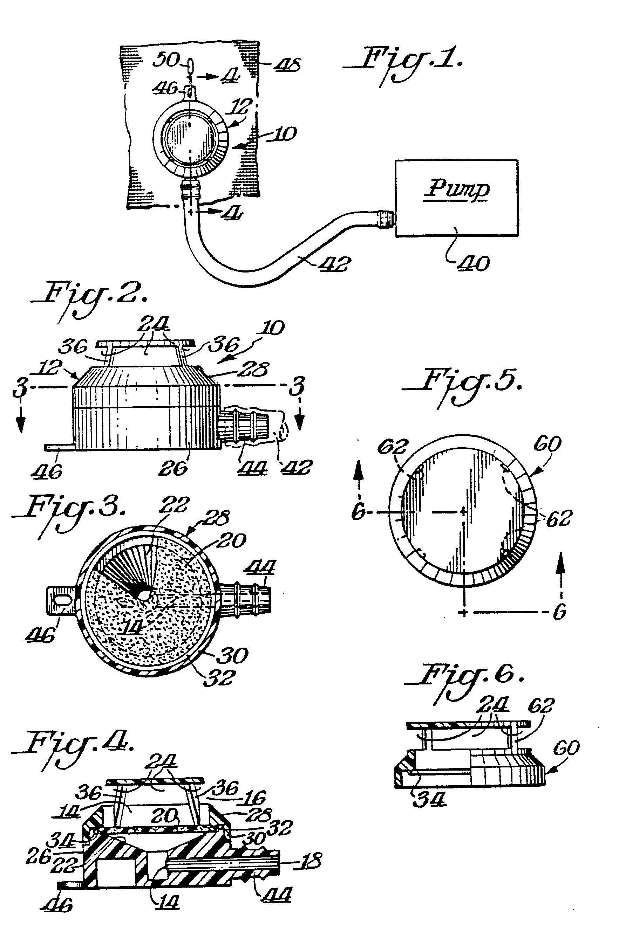

Referring in more particularity to the drawing, Figure 1 illustrates a filter cassette 10 for the sampling of airborne substances. The cassette comprises a body section 12 having an air flow passageway 14 extending therethrough from an air inlet 16 to an air outlet 18. A filter medium 20 inside the body section 12 is disposed across the air flow passageway 14 for capturing airborne substances flowing through the passageway, as explained more fully below. The filter medium may be any suitable filter for the intended sampling, such as a 37 mm. polyvinyl chloride filter with a nominal pore size of 5 µm, when the airborne substance is coal dust, for example. The passageway portion directly downstream from the filter medium 20 has a frusto-conical contour 22 that converges in the direction of flow. Moreover, the air inlet 16 comprises openings 24 in the body section 12 upstream from the filter medium 20, the openings being arranged to direct air into the air flow passageway 14 normal to the direction of flow onto the filter medium 20.

As best shown in Figures 2 and 4, the body section 12 includes an inner portion 26 and an outer portion 28. Outer portion 28 includes a downwardly extending annular collar 30 that tightly fits over an upstanding annular segment 32 on the inner portion 26 of the body section. The interior dimensions of the collar 30 and upstanding segment 32 are such that a friction fit is provided between the inner and outer body portions. This friction fit provides a releasable connection between the portions of the body section. The inner and outer body portions may be fabricated from thermoplastic materials by techniques known in the art, it being understood that other materials and fabrication methods are equally suitable.

As shown best in Figure 4, the filter medium 20 is sandwiched between the inner and outer portions of the body section. Each of these portions is suitably dimensioned to receive the filter medium. Additionally, the outer portion 28 of the body section 12 includss an annular bead 34 next to the periphery of the filter medium 20 for engaging and holding it in place between the inner and outer portons of the body section.

The outer portion 28 of the body section 12 includes an outside frusto-conical surface 36 in which the air inlet openings 24 are located. As shown best in Figures 2 and 4, the openings 24 are in the form of circumferential slots around the circumference of the outside of the frusto-conical surface.

A small self-contained pump 40 is connected to the air outlet 18 for drawing airborne substances through the air passageway 14 onto the filter medium 20. A hose 42 innerconnects the pump 40 with a hose connector 44 surrounding the air outlet 18. The pump may be a Dupont P-4000, constant flow, personal sampling pump, calibrated at 2.0 lpm using a 1.0 liter bubblemeter, for example, it being understood that other pumps are equally suitable. Attaching structure 46 on the inner portion 26 of the body section 12 is provided for releasably securing the filter cassette 10 to the clothing 48 of the user, and a pin 50 innerconnects the clothing 48 with the attaching structure.

Figures 5 and 6 illustrate an alternative embodiment of the present invention which is identical to the filter cassette 10 except for a modified outer portion 60. Specifically, outer portion 60 differs from its counterpart 28 in that the portion 60 has a cylindrical surface 62 in which the air inlet openings 24 are located. The inlet openings 24 are also in the form of circumferential slots around the circumference of the outside cylindrical surface 62. Otherwise, outer portion 60 is the same as outer portion 28 and similar reference characters have been even used to identify similar parts.

In operation, the filter cassette 10 of the present invention operates in a very efficient manner to collect a sample of airborne substances. After deciding upon the appropriate filter medium 20, the filter is inserted between the inner and outer portions of the body section 12 as shown in Figure 4. These portions are then fitted together to anchor the filter medium in place. Next, the filter cassette is attached at its location of use such as to the clothing 48 of the user. This is accomplished by threading the pin 50 through the attaching structure 46 and clothing 48. Following such attachment, the pump 40 and its associated tube 42 are connected to the hose connector 44 surrounding the air inlet 18. Upon activation of the pump, air and airborne particles are drawn into the passageway 14 through the circumferential openings 24 that direct the air and airborne substances into the passageway normal to the direction of flow onto the filter medium 20. The air passes through the filter medium and the airborne substances are collected upon the filter medium. Ultimately the air being drawn through the tube 42 is released at the pump 40.

The frusto-conical contour 22 directly downstream from the filter medium 20 enables a uniform distribution of airborne substances upon the filter medium 20. Also, since the air inlet openings 24 are normal to the flow through the passageway 14, the deposition of airborne substances on the filter medium is not adversely affected by tampering or foreign contamination, such as extraneous splashes in the vicnity of the cassette. Collection of a uniform distribution of airborne substances on the filter medium enables analyses by polarized light microscopy, X-ray diffraction, and X-ray fluorescence, for example. Such analysis can only be performed when the sample collected by the filter is uniformly distributed thereon. Hence, the filter cassette 10 of the present invention eliminates the disadvantages of both the closed-face cassette and the open-face cassette. Tampering and extraneous interference are prevented and a sample of uniform distribution is collected.

**Claims**

1. A portable filter cassette (10) for sampling of airborne substances on a filter medium 1, which cassette comprises a body section (12) having an air flow passageway (14) extending therethrough from an air inlet (16) to an air outlet (18), a filter medium (20) inside the body section disposed across the air flow passageway for capturing airborne substances flowing through the passageway, the passageway portion directly downstream from the filter medium having a frusto-conical contour (22) converging in the direction of flow, and the air inlet comprising openings (24) in the body section upstream from the filter medium arranged to direct air into the air flow passageway onto the filter medium (20); characterised in that the filter medium (20) is a flat element of uniform properties throughout, and in that air inlet openings are disposed uniformly around the body section to provide a substantially uniform air flow into said air flow passageway and onto the filter medium to obtain a uniform distribution of airborne substances on said filter medium.

2. A filter cassette as claimed in Claim 1, characterised in that the body section (12) includes an outside frusto-conical surface (36) in which the air inlet openings (24) are located, the openings being in the form of circumferential slots disposed uniformly around the circumference of the outside frusto-conical surface.

3. A filter cassette as claimed in Claim 1, characterised in that the body section (12) includes an outside cylindrical surface (62) in which the air inlet openings (24) are located, the openings being in the form of circumferential slots around the circumference of the outside cylindrical surface.

4. A filter cassette as claimed in any of Claims 1 to 3, characterised in that the body section (12) includes inner and outer portions (26, 28), and a releasable connection (30, 32), between the portions.

5. A filter cassette as claimed in Claim 4 or Claim 5,. characterised in that the filter medium (20) is disposed between the inner and outer portions (26, 28) of the body section (12).

6. A filter cassette as claimed in Claim 4 or Claim 5, characterised in that the filter medium (20) is disposed between the inner and outer portions (26, 28) of the body section (12).

7. A filter cassette as claimed in Claim 6, characterised in that the outer portion (28) of the body section (12) includes an annular bead (32) thereon next to the peripheral portion of the filter medium for engaging the medium (20) to hold it in place between the inner and outer portions (26, 28) of the body section (12).

8. A filter cassette as claimed in any of Claims 4 to 7, characterised in that the inner section (26) of the body (12) includes a hose connector (44) surrounding the air outlet (18).

9. A filter cassette as claimed in any of Claims 4 to 8, characterised in that the outer portion (28) of the body section (12) includes an outside cylindrical surface (62) in which the air inlet openings (24) are located, the openings being in the form of circumferential slots around the circumference of the outside cylindrical surface (62).

10. A filter cassette as claimed in any of Claims 4 to 8, characterised in that the outer portion (28) of the body section (12) includes an outside frusto-conical surface (36) in which the air inlet openings (24) are located, the openings being in the form of circumferential slots around the circumference of the outside frusto-conical surface (36).

11. a filter cassette as claimed in any of Claims 1 to 10 in combination with pump means (40) connected to the air outlet (18) for drawing airborne substances through the air passageway (14) and onto the filter medium (20).

12. A filter cassette as claimed in Claim 11, characterised in that the pump means (40) includes a hose (42) connected to the body section (12) at the air outlet (18) thereof.

13. A filter cassette as claimed in any of Claims 1 to 12 including attaching means (46) on the outside of the body section (12) for securing the cassette to the user.

14. A filter cassette as claimed in Claims 1 to 13 characterised in that the body section (12) is fabricated from thermoplastics material.

**Patentansprüche**

1. Eine tragbare Filterkassette (10) zum Sammeln der fliegenden Partikel auf einem Filter-Medium, umfaßt ein Gehäuseteil (13) mit einer Lufstromführung (14), die von der Lufteinlaßöffnung (16) bis zur Luftauslaßöffnung (18) reicht, ein Filtermedium (20) innerhalb des Gehäuseteils, das quer zum Luftstrom in der Luftführung angeordnet ist, um die fliegenden Partikel, die durch die Luftführung strömen, einzufangen, eine stumpfkegelige Ausformung (22) der Luftstromführung im Anschluß an der Filter in Strömungsrichtung, die sich in Strömungsrichtung verjüngt, und den Lufteinlaß, der Öffnungen (24) im Gehäuseteil, oberhalb des Filtermediums umfaßt, deren Stellung die einströmende Luft in die luftstromführung einleitet und auf das Filtermedium (20) richtet, und dadurch charakterisiert wird, daß das Filtermedium (20) ein flaches Element mit durchweg gleichen Eigenschaften ist und daß die Lufteinlaßöffnungen gleichmäßig um den Gehäuseteil angeordnet sind, um für einen weitgegehend gleichförmigen Luftstrom in die angeführte Luftstromführung und auf das Filtermedium zu sorgen und eine gleichmäßige Verteilung der fliegenden Partikel auf dem genannten Filtermedium zu erzielen.

2. Eine Filterkassette wie im Patentanspruch 1, die sich durch einen Gehäuseteil (12) auszeichnet, der eine äußere stumpfkegelige Oberfläche besitzt (36), auf der die Lufteinlaßöffnungen (24) anbebracht sind, wobei die Öffnungen als ringförmige Schlitze gleichmäßig auf dem Umfang der äußeren stumpfkegeligen Oberfläche angeordnet sind.

3. Eine Filterkassette wie im Patentanspruch 1, die sich durch einen Gehäuseteil (12) auszeichnet, der eine äußere zylinderförmige Oberfläche besitzt (36), auf der die Lufteinlaßöffnungen (24) angebracht sind, wobei die Öffnungen als ringförmige Schlitze gleichmäßig auf dem Umfang der äußeren zylinderförmigen Oberfläche angeordnet sind.

4. Eine Filterkassette wie in den Patentansprüchen 1 bis 3, die sich dadurch auszeichnet, daß das Gehäuseteil (12) innere und äußere Teile (26, 28) und lösbare Verbindung (30, 32) zwischen den Teilen enthält.

5. Eine Filterkassette wie in Patentanspruch 4, die sich dadurch auszeichnet, daß das Filtermedium (20) zwischen den inneren und äußeren Teilen (26, 28) des Gehäuseteils (12) angeordnet ist.

6. Eine Filterkassette wie in den Patentansprüchen 4 oder 5, die sich dadurch auszeichnet, daß das Filtermedium (20) zwischen den inneren und äußeren Teilen (26, 28) des Gehäuseteils (12) angeordnet ist.

7. Eine Filterkassette wie in Patentanspruch 6, die sich dadurch auszeichnet, daß der äußere Teil (28) des Gehäuseteils (12) einen Ringwulst (32) besitzt, nahe am peripheren Teil des Filterteils, um das Filtermedium (20) zwischen den inneren und äußeren Teilen (26, 28) des Gehäuseteils (12) zu befestigen.

8. Eine Filterkassette wie in einem der Patentansprüche 4 bis 7, die sich dadurch auszeichnet, daß der innere Teile (26) des Gehäuseteils (12) einen Schlauchanschluß (44) besitzt, der die Luftauslaßöffnung (18) umfaßt.

9. Eine Filterkassette wie in einem der Patentansprüche 4 bis 8, die sich dadurch auszeichnet, daß der äußere Teil (28) des Gehäuseteils (12) eine äußere zylindrische Oberfläche (62) besitzt, in der die Lufteinlaßöffnungen (24) in ihrer ringförmigen Schlitzform rings um die äußere zylindrische Oberfläche angeordnet sind (62).

10. Eine Filterkassette wie in einem der Patentansprüche 4 bis 8, die sich dadurch auszeichnet, daß der äußere Teil (28) des Gehäuseteils (12) eine äußere stumpfkegelige Oberfläche (36) besitzt, in der die Lufteinlaßöffnungen (24) in ihrer ringförmigen Schlitzform rings um die äußere stumpfkegelige Oberfläche (36) angeordnet sind.

11. Eine Filterkassette wie in einem der Patentansprüche 1 bis 10 in Verbindung mit Pumpgeräten (40), die an die Luftauslaßöffnung angebracht sind (18) um fliegende Partikel durch die Luftstromführung (14) und auf das Filtermedium (20) zu bewegen.

12. Eine Filterkassette wie in Patentanspruch 11, die sich dadurch auszeichnet, daß die Pumpgeräte (40), einen Schlauch (42) umfassen, der an das Gehäuseteil (12) an die entsprechende Luftauslaßöffnung angebracht (18) ist.

13. Eine Filterkassette wie in irgendeinem der Patentansprüche 1 bis 12, die Befestigungsvorkehrungen (46) auf der Außenseite des Gehäuseteils (12) zur Befestigung der Kassette durch den Benutzer besitzt.

14. Eine Filterkassette wie in den Patentansprüchen 1 bis 13, die sich dadurch auszeichnet, daß das Gehäusuteil (12) aus thermoplastischem Material hergestellt ist.

**Revendications**

1. Cassette ou cartouche de filtre (10) portable, destinée à l'échantillonnage de substances véhiculés dans l'air sur un milieu filtrant et comportant un element de corps (12) présentant un passage d'écoulement pour l'air (14) qui s'étend à travers lui depuis une entrée d'air (16) jusqu'à une sortie d'air (18), un milieu filtrant (20) disposé à l'intérieur de l'élément de corps en travers du passage d'écoulement pour l'air afin de capturer des substances véhiculées dans l'air qui s'écoulent à travers le passage, la partie de passage directement en aval du milieu filtrant présentant un contour tronconique (22) qui converge dans le sens de l'écoulement, l'entrée d'air comprenant des ouvertures (24) qui sont prévues dans l'élément de corps en amont du milieu filtrant et sont agencées pour diriger l'air dans le passage d'écoulement pour l'air sur le milieu filtrant (20), caractérisée en ce que le milieu filtrant (20) est un élément plat dont les propriétés sont entièrement uniformes et en ce que les ouvertures de l'entrée d'air sont disposées uniformément autour de l'élément de corps pour procurer un écoulement d'air sensiblement uniforme dans le passage d'écoulement pour l'air et sur le milieu filtrant de façon à obtenir une distribution uniforme des substances véhiculées dans l'air sur le milieu filtrant.

2. Cassette vu cartouche de filtre suivant la revendication 1, caractérisée en ce que l'élément de corps (12) comprend une surface tronconique externe (36) dans laquelle les ouvertures (24) de l'entrée d'air sont situées, les ouvertures étant, sous la forme de fentes circonférentielles, disposées uniformément sur la circonférence de la surface tronconique externe.

3. Cassette ou cartouche de filtre suivant la revendication 1, caractérisée en ce que l'élément de corps (12) comprend une surface cylindrique externe (62) dans laquelle les ouvertures (24) de l'entrée d'air sont situées, les ouvertures étant, sous la forme de fentes circonférentielles, disposées sur la circonférence de la surface cylindrique externe.

4. Cassette ou cartouche de filtre suivant l'une quelconque des revendications 1 à 3, caractérisée en ce que l'élément de corps (12) comprend des parties interne et externe (26, 28) et une liaison détachable (30, 32) entre les parties.

5. Cassette ou cartouche de filtre suivant l'une des revendications 4 et 5, caractérisée en ce que le milieu filtrant (20) est disposé entre les parties interne et externe (26, 28) de l'élément de corps (12).

6. Cassette ou cartouche de filtre suivant l'une des revendications 4 et 5, caractérisée en ce que le milieu filtrant (20) est disposé entre les parties interne et externe (26, 28) de l'élément de corps (12).

7. Cassette ou cartouche de filtre suivant la revendication 6, caractérisée en ce que la partie externe (28) de l'élément de corps (12) comprend une nervure annulaire (32) à proximité de la partie périphérique du milieu filtrant pour entrer en prise avec le milieu (20) afin de le maintenir en place entre les parties interne et externe (26, 28) de l'élément de corps (12).

8. Cassette ou cartouche de filtre suivant l'une quelconque des revendications 4 à 7, caractérisée en ce que la partie interne (26) du corps (12) comprend un raccord (44) pour tuyau flexible qui entoure la sortie d'air (18).

9. Cassette ou cartouche de filtre suivant l'une quelconque des revendications 4 à 8, caractérisée en ce que la partie externe (28) de l'élément de corps (12) comprend une surface cylindrique externe (62) dans laquelle les ouvertures d'entrée d'air (24) sont situées, les ouvertures étant, sous la forme de fente circonférentielles, disposées sur la circonférence de la surface cylindrique externe (62).

10. Cassette ou cartouche de filtre suivant l'une quelconque des revendications 4 à 8, caractérisée en ce que la partie externe (28) de l'élément de corps (12) comprend une surface tronconique externe (36) dans laquelle les ouvertures d'entrée d'air (24) sont situées, les ouvertures étant, sous la forme de fentes circonférentielles, disposées sur la circonférence de la surface tronconique externe (36).

11. Cassette ou cartouche de filtre suivant l'une quelconque des revendications 1 à 10, en combinaison avec un moyen de pompe (40) relié à la sortie d'air (18) pour aspirer des substances véhiculées dans l'air à travers le passage (14) et sur le milieu filtrant (20).

12. Cassette ou cartouche de filtre suivant la revendication 11, caractérisée en ce que le moyen de pompe (40) comprend un tuyau flexible (42) relié à l'élément de corps (12), à sa sortie d'air (18).

13. Cassette ou cartouche de filtre suivant l'une quelconque des revendications 1 à 12, comprenant un moyen de fixation (46) prevu sur l'extérieur de l'élément de corps (12) en vue de fixer la cassette ou cartouche sur l'utilisateur.

14. Cassette ou cartouche de filtre suivant l'une des revendications 1 à 13, caractérisée en ce que l'élément de corps (12) est fabriqué en une matière thermoplastique.

Fig.1.

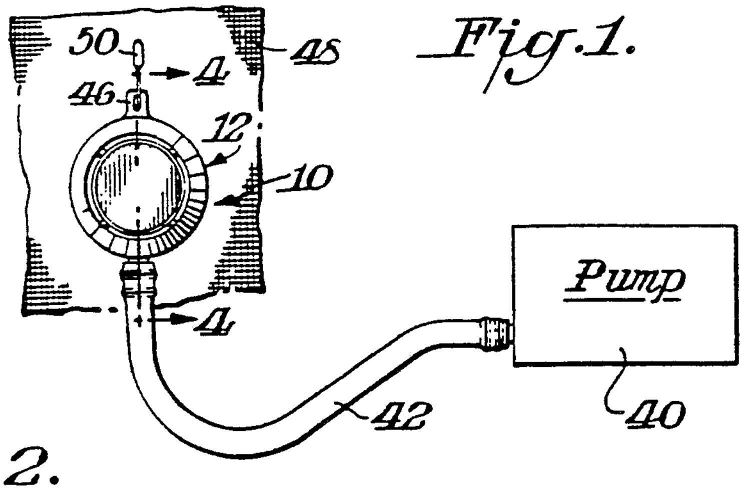


Fig.2.

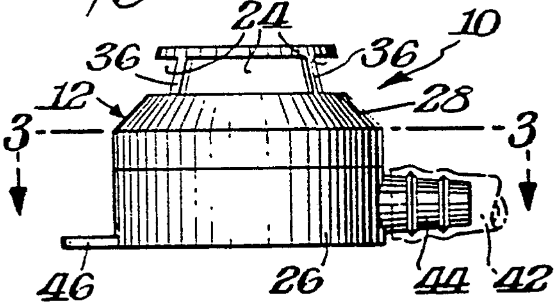


Fig.3.

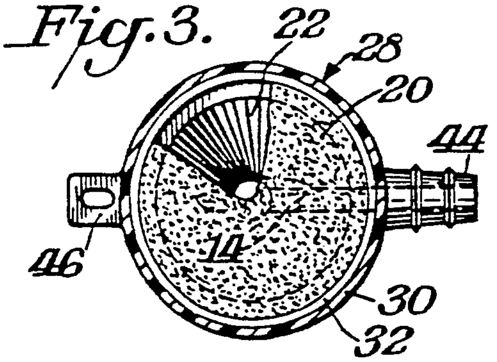


Fig.4.

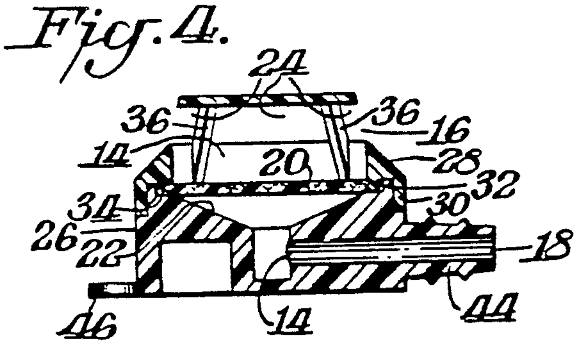


Fig.5.

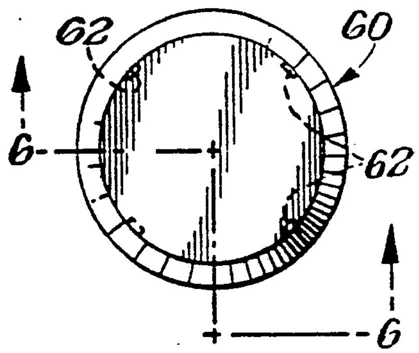


Fig.6.